# EUROPÄISCHE PATENTSCHRIFT

(11) **EP 4 038 730 B1**
(45) Veröffentlichungstag und Bekanntmachung des Hinweises auf die Patenterteilung: **09.07.2025**
(21) Anmeldenummer: 21801874.5
(22) Anmeldetag: 27.10.2021
(51) Int. Cl.: H02K 11/25, H02K 21/00, G01K 11/26

(54) **ZUSTANDSÜBERWACHUNG FÜR EIN ROTIERENDES ELEMENT EINER KRAFT- ODER ARBEITSMASCHINE, INSBESONDERE FÜR DEN ROTOR EINES ELEKTROMOTORS**
MONITORING THE STATE OF A ROTATING ELEMENT, IN PARTICULAR OF AN ELECTRIC MOTOR ROTOR
SURVEILLANCE D'ETAT D'UN ELEMENT ROTATIF, NOTAMMENT D'UN ROTOR D'UN MOTEUR ÉLECTRIQUE

(30) Priorität: 02.12.2020 EP 20211197
(43) Veröffentlichungstag der Anmeldung: 10.08.2022
(73) Patentinhaber: pro-micron GmbH, 87600 Kaufbeuren (DE)
(72) Erfinder: WUNDERLICH, Rainer, 87600 Kaufbeuren (DE); RIETZLER, Manfred, Tungmahamek, Sathorn, Bangkok 10120 (TH)
(74) Vertreter: Raffay & Fleck
(86) Internationale Anmeldenummer: PCT/EP2021/079856
(87) Internationale Veröffentlichungsnummer: WO 2022/117265

(56) Entgegenhaltungen:
- EP-A1- 2 351 992
- WO-A1-2020/200822
- WO-A2-97/09596
- DE-A1- 102018 213 405

## Beschreibung

Die Erfindung betrifft eine Überwachungseinrichtung zum Überwachen eines Zustandsparameters wie der Temperatur eines rotierenden Elements einer Kraft- oder Arbeitsmaschine, insbesondere des Rotors eines Elektromotors, insbesondere eines Synchronmotors, mit den Merkmalen des Oberbegriffs des Anspruchs 11. Sie betrifft zudem eine Kraft- oder Arbeitsmaschine, insbesondere einen Elektromotor, mit einem Gehäuseteil, mit in dem Gehäuseteil angeordnet je einem Statorelement und einem Rotorelement sowie mit einer Überwachungseinrichtung zum Überwachen eines Zustandsparameters, wie einer Temperatur, des Rotorelements, mit den Merkmalen des Oberbegriffs des Anspruchs 1.

In diversen Anwendungen, im Besonderen bei Kraft- oder Arbeitsmaschine, sind rotierende Elemente innerhalb von statischen Elementen angeordnet. Dies gilt für Arbeitsmaschinen, wie Generatoren, wie auch für Kraftmaschinen, wie Motoren oder Turbinen. Einen besonderen Platz nehmen hierbei Elektromotoren ein, in denen Rotoren innerhalb von Statoren angeordnet sind und durch entsprechend geregelten Stromfluss durch in Wicklungen gelegte elektrische Leiter erzeugte magnetische Wechselfelder zur Rotation um eine Drehachse angetrieben werden.

Eine besondere Bauform derartiger Elektromotoren sind Synchronmotoren, bei denen die Rotoren mit Permanentmagneten bestückt sind. Derartige Synchronmotoren finden insbesondere im Bereich von Elektrofahrzeugen, so insbesondere den Elektroautomobilen, Anwendung. Insbesondere in dieser Anwendung werden die Synchronmotoren mit hoher Leistung betrieben, um so starke Drehmomente zu erzeugen und hohe Beschleunigungen und Fahrgeschwindigkeiten der Elektroautomobile zu erreichen. Problematisch ist hierbei bekanntermaßen eine bei hoher Leistungsaufnahme des Synchronmotors auftretende Erwärmung von dessen Bauteilen, hierbei insbesondere des Rotors mit den darin angeordneten Permanentmagneten. Hier gilt es, ein Überschreiten einer kritischen Temperatur des Rotors zu verhindern, da ansonsten die Gefahr besteht, dass die Permanentmagnete ihre Magnetisierung verlieren oder sogar vollständig entmagnetisiert werden und damit der Synchronmotor einen irreparablen Schaden nimmt.

Aber auch bei Asynchronmotoren ist eine Überwachung der Temperatur des Rotors von Bedeutung. Insbesondere ist dort wünschenswert, die Temperatur der Kurzschlusswicklungen im Rotor zu kennen und überwachen zu können.

Allgemein ist die Kenntnis der Temperatur des Rotors einer Kraft- oder Arbeitsmaschine aber auch aus anderen Gründen von Wichtigkeit, ist es wünschenswert diese Temperatur möglichst genau zu kennen und überwachen zu können: So können zu hohe Temperaturen die auf der Achse des Rotorelements nachfolgenden Elemente schädigen, so insbesondere die Lager. Z.B. kann sich Fett in einem Lager ab bspw. etwa 150°C zersetzen, was zu einem Verlust der Lagerschmierung führt und damit zu der Gefahr eines Schadens am Lager. Weiterhin kann es, wenn der Rotor heiß, das Statorelement indes noch deutlich kälter ist, im Lager zu einer zu hohen Pressung der Kugeln kommen, was zu einem sehr hohen Verschleiß führt.

Allgemein führt eine Temperaturerhöhung zu einer Längenausdehnung, was auch andere Komponenten in ihrer Funktion beeinträchtigen kann und z.B. bei Spindel-Motoren in Zerspanungsmaschinen dazu führt, dass die Genauigkeit der Bearbeitung beeinträchtigt wird. Eine Temperaturänderung um 10K führt bei einer Längenausdehnung von 10 ppm/K und einer angenommenen Achsenlänge von 100 mm zu einer Längenveränderung von 10*µ*m. Diese Längenveränderung durch eine genaue Kenntnis der Temperatur zu kennen und vorauszusagen, ist in diversen Anwendungen von großem Vorteil, wenn nicht gar erforderlich.

Der Problematik der Überwachung der Temperatur von Rotoren bei Synchronmotoren widmet sich auch bereits der Stand der Technik. Dabei wird die Rotortemperatur allerdings nicht direkt gemessen, sondern typischerweise mittelbar in einer auf Simulation bzw. Hochrechnung beruhenden Annäherung abgeschätzt. Beispiele für derartige Verfahren und Vorgehensweisen sind beschrieben in der EP 3 190 697 A1 und auch in der DE 10 2017 207 401 A1. auch wenn diese Methodik bereits eine verwertbare Bestimmung der Rotortemperaturen ermöglicht, kann damit die tatsächliche, am Rotor anliegende Temperatur jedoch nicht exakt bestimmt werden. Entsprechend ist bei mit dieser Methodik arbeitenden Leistungssteuerungen für Synchronmotoren stets ein gewisser Sicherheitspuffer für die Temperatur eingerechnet und wird so der Synchronmotor typischerweise mit einer unterhalb einer theoretisch erreichbaren Höchstleistung eingestellten Maximalleistung betrieben, um einen für das mittelbare Bestimmungsverfahren der Rotortemperatur gegebenen Fehler zu berücksichtigen und dabei sicherzustellen, dass eine kritische Rotortemperatur, bei der die vorstehend beschriebenen Entmagnetisierungsvorgänge auftreten können, auf keinen Fall erreicht oder gar überschritten wird.

In der DE 10 2018 213 405 A1 wird ein Sensorsystem zur Bestimmung einer Temperatur und mindestens einer Rotationseigenschaft eines um eine Rotationsachse rotierenden Elements offenbart. Dieses System enthält dabei auch einen drahtlos abfragbaren Temperatursensor, der mit der Auswertung von Oberflächenwellen arbeitet.

Die EP 2 351 992 A1 offenbart ein System in einem Elektromotor, in dem mittels SAW-Technik die Rotortemperatur bestimmt und drahtlos ausgelesen werden kann. Die Abfrage beruht dabei auf dem FMCW-Prinzip (Frequency Modulated Continuous Wave) und setzt entsprechend eine genaue Positionserfassung des Rotors relativ zu dem Stator voraus, um die Abfragen in einer geometrischen Position durchzuführen, in der eine ausreichend gute Signalverbindung zwischen der Sensoreinheit und der Abfrageeinheit gegeben ist.

Neben der Temperatur des Rotorelements einer Kraft- oder Arbeitsmaschine, wie eines Elektromotors oder auch einer Turbine oder eines Generators, ist es vielfach auch von Interesse oder sogar wesentlich, die Zustandswerte anderer Zustandsparameter, wie z.B. den Wert eines anliegenden Drehmoments, zu kennen und auch diese Zustandsparameter in situ überwachen und deren Zustandswert unmittelbar an dem Rotorelement messen zu können.

Ausgehend von diesem bekannten Stand der Technik und vor dem Hintergrund des geschilderten Problems ist es Aufgabe der Erfindung, eine Möglichkeit anzugeben, den Zustandswert eines Zustandsparameter, wie insbesondere die Temperatur, von rotierenden Elementen, insbesondere in Kraft- oder Arbeitsmaschinen, durch direkte Messung zu bestimmen und eine dies ermöglichende Sensorik auch in einem Elektromotor zu Bestimmung des Zustandswerts des Zustandsparameter, wie z.B. der Temperatur, des Rotorelements vorzusehen.

Diesem Problem und dieser Aufgabe widmet sich die vorliegende Erfindung, mit der eine Lösung angegeben wird, die eine Überwachung eines Zustandsparameters, wie insbesondere der Temperatur, eines rotierenden Bauteils allgemein, insbesondere die Überwachung der Temperatur des Rotorelements einer Kraft- oder Arbeitsmaschine, im Besonderen des Rotors eines Elektromotors, in Form einer tatsächlichen Bestimmung des Temperaturwertes durch Messung erlaubt. Mit Vorteil soll diese Messung und Ermittlung gegenüber den Umweltbedingungen robust sein, auch bei hohen Drehzahlen des rotierenden Elements zuverlässig möglich sein und vorzugsweise auch ohne eine exakte Synchronisierung der Abfrage mit einer Drehposition des rotierenden Elements funktionieren.

Hierzu wird mit einem ersten Aspekt der Erfindung eine Kraft- oder Arbeitsmaschine, wie insbesondere ein Elektromotor, mit einem Gehäuseteil, z.B. einem Motorgehäuse, mit in dem Gehäuseteil angeordnet je einem Statorelement und einem Rotorelement sowie mit einer Überwachungseinrichtung zum Überwachen eines Zustandsparameters, insbesondere einer Temperatur, des Rotorelements angegeben, wie sie in Anspruch 1 bestimmt ist. Vorteilhafte Weiterbildungen einer so ausgestalteten Kraft- oder Arbeitsmaschine sind in den abhängigen Ansprüchen 2 bis 10 angegeben. In einem weiteren Aspekt wird mit der Erfindung auch eine Überwachungseinrichtung zum Überwachen eines Zustandsparameters, insbesondere einer Temperatur, eines rotierenden Elements, insbesondere des Rotorelements einer Kraft- oder Arbeitsmaschine, wie z.B. des Rotors eines Elektromotors, angegeben, wie es in Anspruch 11 bestimmt ist. Weiterbildungen einer solchen Überwachungseinrichtung sind in den abhängigen Ansprüchen 12 bis 14 bestimmt.

Erfindungsgemäß weist eine Kraft- oder Arbeitsmaschine mit einem Gehäuseteil und mit in dem Gehäuseteil angeordnet je einem Statorelement und einem Rotorelement eine Überwachungseinrichtung zum Überwachen eines Zustandsparameters, wie einer Temperatur oder auch ein anliegendes Drehmoment, des Rotorelements auf. Diese Überwachungseinrichtung umfasst eine Sensoreinheit und eine Abfrageeinheit, die nach dem S-FSCW Prinzip (Switched-Frequency Stepped Continuous Wave) arbeitet. Die Sensoreinheit ist an dem Rotorelement angeordnet. Sie enthält wenigstens ein auf dem Prinzip der Oberflächenwellen basierendes SAW-Sensorelement zum Erfassen eines Zustandswertes des Zustandsparameters, ein Koppelelement und eine das SAW-Sensorelement und das Koppelelement zum Übertragen von analogen elektromagnetischen Signalen verbindende Leiterstruktur. Die Sensoreinheit kann dabei insbesondere auch mehr als ein SAW-Sensorelement umfassen, wobei dann diese mehreren SAW-Sensorelemente insbesondere mit ein und demselben Koppelement über entsprechende Leiterstrukturen verbunden sein können. Die Abfrageeinheit enthält einen Signalgenerator zum Erzeugen von Abfragesignalen. Mit diesem Signalgenerator ist eine Koppelstruktur signaltechnisch verbunden, wobei diese Koppelstruktur an dem Statorelement oder an einem Abschnitt des Gehäuseteils dem Rotorelement zugewandt angeordnet ist und zwar in einem Bereich, der entlang eines zwischen dem Rotorelement und dem Statorelement oder dem Abschnitt des Gehäuseteils ausgebildeten Luftspaltes mit einem von dem Koppelelement bei rotierendem Rotorelement überstrichenen Bereich in einer Weise korreliert, dass eine Kopplung zwischen der Koppelstruktur und dem Koppelelement zur Signalübertragung ermöglicht ist. Die Abfrageeinheit weist schließlich einen Auswerteschaltkreis zum Auswerten von von der Sensoreinheit empfangenen Antwortsignalen auf. Die vorbeschriebene Anordnung der Koppelstruktur kann dabei z.B. gegenüberliegend sein, muss dies aber nicht zwingend. Vorzugsweise wird hier eine Anordnung gewählt, die über einen möglichst großen Drehwinkel zwischen Rotorelement und Statorelement eine Kopplung und Signalübertragung zwischen Koppelstruktur und Koppelelement ermöglicht.

Ein wesentlicher Aspekt dieser erfindungsgemäßen Lösung besteht nun darin, dass für eine unmittelbare Messung eines Zustandswertes eines Zustandsparameters, wie z.B. der Temperatur, des Rotorelements wenigstens ein SAW-Sensorelement zum Einsatz kommt. Diese Art von Sensoren ist einerseits robust und kann auch unter schwierigeren Bedingungen eingesetzt werden, wie zum Beispiel bei hohen Drehzahlen, wie sie bei vielen Kraft- oder Arbeitsmaschinen, z.B. bei Elektromotoren, Turbinen oder auch schnelllaufenden Generatoren, erreicht werden (Drehzahlen von z.B. bis zu 20.000 Umdrehungen/min bei Elektromotoren). Weiterhin herrschen im Inneren von Elektromotoren, aber auch in Generatoren, extrem hohe Magnetfelder, Magnetfeldgradienten sowie extrem schnelle zeitliche Änderungen des Magnetfelds vor. Während für solche elektronischen Schaltungen, wie sie sonst typischerweise in Sensoren verwendet werden, diese Randbedingungen jedenfalls extrem herausfordernd sind, deren Verwendung häufig gar gänzlich ausschließen, können SAW-Sensorelemente auch unter diesen Extrembedingungen eingesetzt werden und können die Zustandswerte von zu überwachenden Zustandsparametern zuverlässig messen.

Ein weiterer wesentlicher Aspekt der Erfindung besteht darin, dass die Abfrageeinheit eine solche ist, die nach dem S-FSCW Prinzip (Switched-Frequency Stepped Continuous Wave) arbeitet. Dieses Prinzip ist z.B. beschrieben in dem in Sensors 2019, 19, 3077 erschienene Artikel "Wireless Readout of Multiple SAW Temperature Sensors" der Autoren Gudrun Bruckner und Jochen Bardong sowie weitergehend erläutert in dem auch in diesem Artikel referenzierten Buch "Surface Acoustic Wave Devices in Telecommunications" von Hashimoto, K., erschienen im Springer Verlag, Berlin, Deutschland, 2000. Eine Abfrage nach diesem Prinzip ist zwar im Vergleich mit anderen Abfrageverfahren, wie dem vorstehend bereits erwähnten FMCW zeitaufwendiger. Allerdings haben die Erfinder herausgefunden, dass es bei der erfindungsgemäßen Anwendung für eine ausreichende Signalqualität des abgefragten Antwortsignals nicht einer wie im Stand der Technik erforderlichen genauen Positionsbestimmung des Rotorelements mit dem daran festgelegten Sensorelement, bzw. dem Koppelelement bedarf, um eine insoweit synchronisierte Abfrage zu unternehmen. Vielmehr kann über einen weit größeren Winkelbereich die Abfrage erfolgen, im Idealfall, wenn reflektierte Signale verwendet werden können, auch über 360°, also in beliebiger Rotationsstellung des Rotorelements. Es sind, auch dies haben die Erfinder herausgefunden, verwertbare Signalantworten auch bei ungünstigerem Signal-Rausch-Verhältnis möglich, bei dem ein Auslesen des Sensorelements mit einer Abfrage nach dem FMCW Prinzip bereits nicht mehr möglich ist. Auch dies trägt dazu bei, dass über einen weiter gezogenen Winkelbereich der Relativstellung zwischen Rotorelement und Statorelement eine Abfrage mit dem hier bevorzugt angewandten S-FSCW Prinzip möglich ist. Weiterhin können mit dem S-FSCW wegen der gestuften Abfrage mögliche Echos in dem System, wie sie z.B. von metallischen Umgebungen und den dort auftretenden Signalreflektionen hervorgerufen werden, unterdrückt werden, indem Wartezeiten zwischen den Abstrahlungen und dem jeweiligen Empfang entsprechend bestimmt werden, dass in diesen Zeiten Echos zumindest weitestgehend abgeklungen sind.

Die Verwendung des S-FSCW Prinzips erlaubt es auch, auf mögliche Funkstörsignale zu reagieren, indem z.B. die kritischen Frequenzen in der gestuften Abfrage einfach übergangen und auf diesen Frequenzen keine Abfragepulse gesendet werden. Auch das gezielte, wiederholte Senden / Empfangen einzelner ausgewählter Frequenzen ist bei diesem Prinzip möglich. Ein weiterer Vorteil des bevorzugt gewählten Prinzips ist in der Möglichkeit zu sehen, die Abfrageelektronik mit vergleichsweise kostengünstigen Standardbauteilen aufzubauen, wie sie z.B. in der herkömmlichen WLAN-Technik Verwendung finden. Dies gilt dann auch für die nachgelagerte Signalverarbeitung in der Abfrageeinheit.

Die Abfrageeinheit kann dabei insbesondere wie in der EP 3171291 A1 beschrieben ausgebildet sein und nach dem dort offenbarten Prinzip arbeiten.

Das SAW-Sensorelement kann, wie bereits erwähnt, grundsätzlich für die Messung eines Zustandswertes eines beliebigen, mit einem solchen Sensorelement zu messenden Zustandsparameter eingerichtet sein, z.B. zur Messung einer Kraft, eines Drehmoments oder eben auch zur Messung einer Temperatur. Für die Messung einer Temperatur kann das SAW-Sensorelement dann auch als SAW-Temperatursensorelement bezeichnet werden. Analoge Bezeichnungen lassen sich für SAW-Sensorelement zur Überwachung anderer Zustandsparameter wählen.

Die Leiterstruktur, die das Koppelelement mit dem SAW-Sensorelement verbindet, kann in einem einfachsten Fall, eine direkte elektrische Verbindung zwischen dem Koppelelement und dem SAW-Sensorelement sein, z.B. eine Lötstelle, an der elektrische Anschlüsse des Koppelelements mit elektrischen Kontakten des SAW-Sensorelements verlötet sind. Die Leiterstruktur kann aber auch ein räumlich erstrecktes Element sein, das zwischen dem Koppelelement und dem SAW-Sensorelement angeordnet ist. Dann muss diese Leiterstruktur in ihren Hochfrequenzeigenschaften auf das Koppelelement angepasst sein, um Hochfrequenzsignale, bspw. bei einer Frequenz von 2,4 GHz, wie sie typischerweise verwendet werden kann, um das SAW-Sensorelement abzufragen und dort Oberflächenwellen anzuregen bzw. einzukoppeln, von dem Koppelelement an das SAW-Sensorelement und auch von dort zurück zum Koppelelement übertagen zu können. Weiterhin muss die Leiterstruktur auch auf das SAW-Sensorelement abgestimmt sein, damit dort das über die Leiterstruktur transportierte elektromagnetische Signal in eine Oberflächenwelle gewandelt werden kann und damit die zurücklaufende Oberflächenwelle dort wieder zur Einspeisung eines hochfrequenten elektromagnetischen Signals in die Leiterstruktur führen kann. Bei einer geschickten Wahl und Auslegung der Leiterstruktur kann hier ggf. sogar eine Verbesserung der Hochfrequenzeigenschaften der gesamten Sensoreinheit, also des verbundenen Systems aus Koppelelement, Leiterstruktur und SAW-Sensorelement, erhalten werden.

SAW-Sensorelemente lassen sich auch in einer weitgehenden Weise miniaturisiert herstellen, sodass diese an einem Rotorelement, wie z.B. dem Rotor eines Elektromotors, den Turbinenschaufeln einer Turbine oder auch dem Läufer eines Generators, vergleichsweise problemlos angeordnet werden können. Insbesondere ist es dabei auch möglich, das oder die SAW-Sensorelement(e) versenkt in dem Vollmaterial des Rotorelements anzuordnen, zum Beispiel in einer ausgehend von einer Oberfläche des Rotorelements in dessen Körper hineingetriebenen Bohrung. Hierfür können zum Beispiel auch produktionsseitig ohnedies bereits vorhandene Bohrungen oder andere Öffnungen in einem solchen Rotorelement verwendet werden als Aufnahme für das oder die SAW-Sensorelement(e). Durch eine solche versenkte Aufnahme kann zum einen eine Messung eines Zustandswertes, wie z.B. einer Temperatur, noch gezielter in einem sensiblen Bereich, bei Verwendung von mehreren SAW-Sensorelementen auch in mehreren Abschnitten, vorgenommen werden, zum anderen ist das / sind die SAW-Sensorelement(e) in einer solchen Bohrung geschützt angeordnet und muss nicht etwa z.B. gegen mögliche auftretende Zentrifugalkräfte beim Rotieren des Rotorelements besonders gesichert werden. Da Rotorelemente von Kraft- oder Arbeitsmaschinen, wie z.B. der Rotor eines Elektromotors, typischerweise aus einem metallischen Material besteht, welches elektromagnetische Strahlung abschirmt, ist das Koppelelement im Bereich der Oberfläche des Rotorelements anzuordnen. Bei einer bevorzugt versenkten Anordnung des SAW-Sensorelements in einer Bohrung wird dabei die in die Bohrung hineinreichende Strecke zwischen dem Koppelelement und dem oder den SAW-Sensorelement(en) durch die dann eben als eigenständiges Bauteil geformte und nicht nur durch eine einfache elektrische Verbindung geschaffene Leiterstruktur(en) überbrückt, gegebenenfalls gestützt durch einen Träger, auf den die Komponenten der Sensoreinheit angeordnet sind. Die Leiterstruktur(en) ist/sind dabei, wie vorstehend bereits erwähnt, eingerichtet und abgestimmt, von dem Koppelelement empfangene elektromagnetische Signale der Abfragefrequenz, die zum Beispiel im Bereich des Frequenzbandes von 2,4 GHz liegen kann, von dem Koppelelement zu dem / zu den SAW-Sensorelement(en) zu leiten und ebenso die Signalantwort des SAW-Sensorelements / der SAW-Sensorelemente zurück zu übermitteln an das Koppelelement für ein drahtloses Übertragen dieser Antwort an die Koppelstruktur.

Wenn die Sensoreinheit in einer Bohrung festgelegt wird, so kann sie, wenn sie zu einer Überwachung einer Temperatur des Rotorelements eingesetzt werden soll, ein oder mehrere SAW-Temperatursensorelement(e) aufweisen und kann in der Bohrung in einem, insbesondere aushärtbaren und pastenförmigen, Material eingebettet sein, welches eine hohe thermische Leitfähigkeit aufweist und welches eine Verankerung der Sensoreinheit in der Bohrung bewirkt. Auf diese Weise wird ein fester Halt der Sensoreinheit an dem Rotorelement auch bei hohen Drehzahlen und gegen die dabei auftretenden Kräfte bewirkt und zugleich eine Erhöhung der Messgenauigkeit der Temperatur erzielt, da die am Rotorelement anliegende Temperatur sehr gut an das oder die in dem die hohe thermische Leitfähigkeit aufweisenden Material eingebetteten SAW-Temperatursensorelement(e) weitergeleitet wird. Verwendbar sind hier insbesondere solche pastösen Füllstoffe oder Klebstoffe, die einerseits die Sensoreinheit in der Bohrung so festzuhalten vermögen, dass diese auch bei hohen Drehzahlen des Rotorelements und den dabei auftretenden Zentrifugalkräften fest in der Bohrung sitzt, die andererseits aber auch eine ausreichend hohe Flexibilität aufweist und thermische Spannungen, die bei einer Erwärmung aufgrund der unterschiedlichen thermischen Ausdehnungskoeffizienten des Materials des Rotorelements und des Materials der Sensoreinheit, insbesondere des Kristallmaterials des SAW-Sensorelements oder der Sensorelemente auszugleichen und so zu vermeiden, dass insbesondere das oder die SAW-Sensorelement(e) etwa Schaden nimmt/nehmen.

Der Begriff "hohe thermische Leitfähigkeit" besagt dabei, dass das Material den Wärmeübertrag von dem Material des Rotorelements auf das oder die SAW-Temperatursensorelement(e) deutlich verbessert, verglichen mit einem Zustand ohne ein solches Material. Dazu hat das hier bevorzugt verwendete Material eine deutlich höhere Wärmeleitfähigkeit als Luft (deren Leitfähigkeit bei ca. 0,024 W/mK beträgt), weist bevorzugt in dem relevanten Temperaturbereich der Einsatztemperaturen eine Wärmeleitfähigkeit von 1 W/mK oder mehr auf.

Da auch die Koppelstruktur der Abfrageeinheit in kleiner Baugröße realisiert werden kann, kann diese in einem vergleichsweise engen Raum und Bereich eines eng bemessenen Luftspaltes, der z.B. ein Maß von 20 mm oder weniger, insbesondere von 15 mm oder weniger, ggf. sogar noch weniger, wie z.B. 7 mm oder weniger, oder sogar bis hin zu nur 2 mm, aufweisen kann, in einer Position angeordnet werden, die einem von dem Koppelelement bei rotierendem Rotorelement überstrichenen Bereich gegenüberliegt und kann dabei eine Kommunikation zwischen der Abfrageeinheit und der Sensoreinheit über eine drahtlose Signalübermittlung zwischen Koppelstruktur und Koppelelement ausbilden, ohne hier den Aufbau und die Funktion des Elektromotors etwa zu beeinträchtigen.

Mit der wie vorstehend beschriebenen Technologie und dem besonderen Aufbau der Kraft- oder Arbeitsmaschine, wie z.B. eines Elektromotors, mit der beschriebenen Sensorik kann also ein Zustandswert eines Zustandsparameters, wie z.B. die Temperatur, des Rotorelements direkt gemessen werden, sodass nicht auf eine näherungsweise Bestimmung anhand von Berechnungen und Simulationen zurückgegriffen werden muss. Entsprechend ist z.B. bei einer Temperaturmessung das Fehlerfenster der ermittelten Temperatur deutlich geringer, sodass z.B. ein so ausgerüsteter Elektromotor im Grenzbereich mit höherer Leistung betrieben werden kann, ein Zurückfahren der Leistung, wenn eine kritische Temperatur erreicht wird, erst dann erfolgen muss, wenn diese Temperatur tatsächlich gemessen wird, und nicht bereits zuvor unter Einbeziehung eines Sicherheitspuffers aufgrund der Ungenauigkeiten einer indirekten Temperaturabschätzung durch Simulation und rechnerische Ableitung aus anderen ermittelten Parametern. Die Erfinder gehen hier davon aus, dass ein Betreiben eines erfindungsgemäß aufgebauten Elektromotors in einem Bereich von bis zu 10 % oberhalb der Leistungsobergrenze von solchen Modellen möglich ist, die für die Temperaturbestimmung auf die indirekten Methoden einer Simulation, bzw. rechnerischen, mittelbaren Bestimmung zurückgreifen.

Das SAW-Sensorelement der Sensoreinheit kann grundsätzlich nach einem beliebigen der beiden bekannten Prinzipien des Resonators bzw. des nach dem Laufzeitverzögerungsprinzip arbeitenden SAW-Sensorelements (sogenannte Delayline-SAW) sein. Die Erfinder haben allerdings herausgefunden, dass sich SAW-Sensorelemente der zweitgenannten Bauform und Funktionsweise besonders gut für die Umsetzung der Erfindung eignen.

Auch wenn im Hinblick auf die Umsetzung der Erfindung in einem Elektromotor grundsätzlich die Bestimmung gerade der Rotortemperatur in verschiedenen möglichen Formen von Elektromotoren, sowohl bei Asynchronmotoren als auch bei Synchronmotoren, von Bedeutung sein kann, ist dies insbesondere bei Synchronmotoren mit an dem Rotor angeordneten Permanentmagneten von besonderer Bedeutung. Denn hier kann eine zu hohe Rotortemperatur, wie eingangs bereits ausgeführt, zu einer teilweisen oder vollständigen Entmagnetisierung der Permanentmagnete am Rotor führen und damit zu einem irreversiblen Schaden und Funktionsausfall des Motors. Gerade bei solchen Synchronmotoren, die aktuell im Bereich von Elektroautomobilen Einsatz finden, ist eine erfindungsgemäße Ausgestaltung von besonderem Vorteil, erlaubt sie doch eine genauere Leistungssteuerung der Elektromotoren und dabei ein Betreiben dieser Synchronmotoren weiter in den Grenzbereich einer Maximalleistung herein, sodass aus Synchronmotoren gleicher Bauart eine höhere Leistung erhalten werden kann, bzw. zum Erreichen einer vorgegebenen Leistung auch anders und einfacher aufgebaute Synchronmotoren, die typischerweise kostengünstiger sind, verwendet werden können. Damit die Entmagnetisierung der Permanentmagnete bei möglichst hohen Temperaturen einsetzt, werden bei den in Elektromotoren verbauten Permanentmagneten Legierungen mit extrem raren und sehr teuren seltenen Erden eingesetzt. Durch eine genauere Kenntnis der tatsächlichen Rotortemperatur, wie sie die Erfindung ermöglicht, kann nun für den Elektromotor entweder bei gleichen Permanentmagneten die Leistung erhöht werden, oder es kann die gleiche Leistung mit aus anderen Legierungen gebildeten und damit kostengünstigeren Permanentmagneten erreicht werden.

Neben einer Überwachung der Temperatur kann auch die Überwachung von anderen Zustandsparametern gerade auch bei einem Synchronmotor von großem Vorteil sein.

Für die Anordnung der Sensoreinheit ist besonders vorteilhaft, wenn diese in einer solchen Weise gelagert ist, dass das Koppelelement an einer an einem axialen Ende des Rotors liegenden Oberfläche angeordnet ist. Die Koppelstruktur der Abfrageeinheit ist dann üblicherweise an einem stirnseitigen Gehäuseelement, zum Beispiel einem Gehäusedeckel, der Kraft- oder Arbeitsmaschine, wie eines Elektromotors, angeordnet. Eine solche Anordnung, dies haben die Erfinder erkannt, ermöglicht ebenfalls eine drahtlose Kommunikationsverbindung zwischen der Koppelstruktur der Abfrageeinheit und dem Koppelelement der Sensoreinheit über einen weiten Drehbereich des Rotors, vielfach in einem Bereich von 270° oder sogar darüber, insbesondere, wenn dies in Kombination mit der Wahl des S-FSCW Prinzips für die Abfrageeinheit verbunden wird. Ein so weiter Drehbereich, in dem die Abfrage möglich ist, ist von Vorteil, da die Übermittlung des Abfragesignals bis hin zum Erhalt des Antwortsignals in einem Zeitfenster erfolgen sollte, idealerweise muss, in dem eine Drahtlosverbindung zwischen der Koppelstruktur und dem Koppelelement durchgehend Bestand hat. Gerade bei hohen Drehzahlen ist ein solches Zeitfenster nur dann ausreichend groß, wenn über einen weiten Drehwinkel des Rotors die Verbindung zwischen Koppelstruktur und Koppelelement gewährleistet ist. Bei der wie vorstehend erläuterten Anordnung von Koppelelement und Koppelstruktur kann es von Vorteil sein, wenn diese in einer im Wesentlichen gleichen radialen Entfernung zur Rotationsachse des Rotorelements positioniert angeordnet sind. Vielfach kann so eine optimale Kopplung zwischen der Koppelstruktur und dem Koppelelement noch weiter unterstützt werden. Abhängig von der Struktur und Geometrie des Umfeldes, in denen die beteiligten Elemente an dem Statorelement und dem Rotorelement angeordnet sind, und auch abhängig davon, ob ggf. mehrere Sensoren vorgesehen sind, die von der Abfrageeinheit abzufragen sind, können auch andere Anordnungen mit abweichender radialer Entfernung zur Rotationsachse vorteilhaft sein, insbesondere wenn diese eine besonders gute Überdeckung einer mit guter Signalantwort möglichen Abfrage über einen weiten Drehwinkelbereich des Rotorelements ermöglichen.

Insbesondere da bei der erfindungsgemäßen Kraft- oder Arbeitsmaschine, wie einem Elektromotor, der Luftspalt eine geringe Höhenerstreckung aufweisen kann, wie vorstehend bereits erwähnt ein Maß von 20 mm oder weniger, insbesondere von 15 mm oder weniger, ja bis hinab zu sehr geringen Abständen von 1 bis 2 mm, aufzeigen kann, können die Abfrageeinheit, insbesondere deren Koppelstruktur, und das Koppelelement der Sensoreinheit so eingerichtet und abgestimmt sein, dass eine vorrangig durch das zeitlich sich verändernde Magnetfeld bestimmte Nahbereichskommunikation zwischen der Abfrageeinheit und der Sensoreinheit stattfindet. Der durch den Luftspalt gebildete Abstand zwischen Koppelstruktur und Koppelelement ist hier nämlich typischerweise nicht so groß, dass sich vollständige elektromagnetische Wellen einer typischen Funkkommunikation ausbilden können, sondern dass vielmehr eine Nahfeldkopplung zu beobachten ist und genutzt werden muss, die vorteilhafterweise durch das Magnetfeld (B-Feld) bestimmt wird. Insoweit sind hier Kopplungselement und Kopplungsstruktur vorzugsweise auch nicht als Antennen im herkömmlichen Sinne ausgebildet, sondern optimiert für eine wie vorstehend beschriebene Nahfeldübertragung. Dies erlaubt insbesondere auch eine Ausbildung der Bauteile Kopplungselement und Kopplungsstruktur in geringer Baugröße und kompakter Bauweise, was deren Anordnung in einem eng bemessenen Luftspalt überhaupt erst ermöglicht.

Gerade dann, wenn hohe Drehzahlen erreicht werden sollen, kann es sich anbieten, dass bei der erfindungsgemäßen Kraft- oder Arbeitsmaschine eine Synchronisation der Abfrageeinheit mit der Rotation des Rotorelements in einer solchen Weise vorgenommen wird, dass die Abfrageeinheit einer Abfrage der Sensoreinheit durchführt, während das Koppelelement in einem Bereich befindlich ist, in dem es mit der Koppelstruktur koppeln kann. Eine solche Synchronisation kann dabei in einer an sich bekannten Weise vorgenommen werden, zumal bei typischerweise bekannten Kraft- oder Arbeitsmaschinen, wie insbesondere bei Elektromotoren, so insbesondere bei Synchronmotoren, die Winkelposition des Rotorelements ohnedies überwacht ist bzw. aus Signalen und Informationen, die schon jetzt abgerufen werden, ermittelt werden kann.

Das im Rahmen der Erfindung verwendete Abfrageverfahren nach dem S-FSCW Prinzip erfasst Daten bei einer größeren Anzahl von Frequenzpunkten unterschiedlicher Frequenz, z.B. bei 600 solchen Frequenzpunkten. Um ein verwertbares Ergebnis der dann auszuführenden Transformation zwischen Frequenz- und Zeitraum, z.B. einer Fourier-Transformation, zu erhalten, werden indes nicht alle erfassten Frequenzpunkte benötigt. Über eine räumliche Zuordnung der Messung an einem bestimmten Frequenzpunkt zu einer bestimmten, z.B. über einen Positionssensor, bzw. einen Winkelstellungssensor erkannten, bzw. erfassten Winkelposition und mit wiederholten Messungen bei derselben Frequenz an derselben Winkelposition bei mehreren Umdrehungen , kann eine Mittelung der Signalantwort für diesen Frequenzpunkt vollzogen und so der Informationsgehalt dieses Frequenzpunktes erhöht werden. Ohne eine wie vorstehend beschriebene Synchronisation der Messung gäbe es hingegen bei wiederholten Messungen bei einem Frequenzpunkt an dann unterschiedlichen Winkelpositionen, gute ebenso wie ungünstige Positionen für den jeweiligen Frequenzpunkt, wodurch der Informationsgehalt eines solchen Punktes geringer bliebe. Wenn hingegen synchronisiert und gemittelt wird, erhält man Frequenzpunkte mit einem hohen Informationsgehalt (starkem von der Abfrageeinheit erhaltenen Signal) und solche mit geringem Signal. Das Auswerteverfahren kann nun bevorzugt die Ergebnisse von Frequenzpunkten mit starker Signalantwort berücksichtigen, z.B. mit einer höheren Gewichtung, und so zu einer deutlich besseren Transformation in den Zeitbereich kommen, der dann weiter ausgewertet wird. Voraussetzung hierfür ist eine Anordnung, bei der es über einen weiten Winkelbereich viele Positionen mit einer ausreichenden Kopplung, also einer starken Signalantwort, insbesondere einem guten Signal-Rausch-Verhältnis, gibt. Aus diesem Vorgehen resultiert dann eine bessere Datenlage als bei einer Messung mit nur wenigen solchen Positionen mit einer besonders guten, womöglich sogar gegenüber den in der vorstehenden Lösung erhaltenen Kopplungen besser ausgestalteten, Kopplung mit starker Signalantwort.

Es kann so mit dem erfindungsgemäßen Verfahren durch eine Kombination mit einer Erfassung der Rotationsposition des Rotorelements relativ zu dem Statorelement eine Abtast-Frequenz oder ganzzahlige Vielfache dieser Frequenz eines gesamten, mehrfach durchzuführenden Messdurchlaufs einem sog. Frequenz-Sweap, z.B. eine Messung von 600 Frequenzpunkten, mit der Drehfrequenz oder ganzzahligen Vielfachen dieser Drehfrequenz des Rotorelements synchronisiert werden, oder es kann jeder einzelne Frequenzpunkt der wiederholt ausgeführten Messreihe mit einer bestimmten Rotor-Winkelposition synchronisiert werden.

Grundsätzlich ist es möglich, dass mit einer Abfrageeinheit mehrere Sensoreinheiten oder auch mehrere SAW-Sensorelemente in einer einzigen Sensoreinheit, dies dann über die eine gemeinsame Koppelstruktur, adressiert und abgefragt werden können. Insoweit kann mit Vorteil insbesondere vorgesehen sein, dass die erfindungsgemäße Kraft- oder Arbeitsmaschine wenigstens zwei, gegebenenfalls mehr als zwei Sensoreinheiten aufweist, die nach dem vorstehend beschriebenen Prinzip aufgebaut sind und arbeiten und deren Koppelelemente jeweils angeordnet sind, mit der Koppelstruktur der Abfrageeinheit zu koppeln. Die Abfrage der mehreren Sensoreinheiten kann dann über verschiedene Kommunikationsfenster erfolgen. Eine Abfrage über verschiedene Kommunikationsfenster kann insbesondere bedeuten, dass die Sensoreinheiten, z.B. über eine unterschiedliche Anordnung der Reflektoren auf den SAW-Sensorelementen und somit unterschiedliche Signallaufzeiten auf den SAW-Sensorelementen, mit unterschiedlichen Zeitversatz "antworten", so dass die Antwortsignale im Zeitspektrum unterschieden und zugeordnet werden können. Hier ist es zum Beispiel möglich, an verschiedenen Stellen des Rotorelements SAW-Sensorelemente zu platzieren und diese über entsprechende Leiterstrukturen mit zugehörigen Koppelelementen zu verbinden und zu Sensoreinheiten auszubilden. Zum Beispiel können auf demselben Radius des Rotorelements an unterschiedlichen Winkelpositionen Koppelelemente verschiedener Sensoreinheit in positioniert sein, welche Sensoreinheiten in über unterschiedliche axiale Längen erstreckt sind und in die Tiefe des Rotorelements ragen, sodass an unterschiedlichen axialen Positionen die SAW-Sensorelemente der verschiedenen Sensoreinheiten positioniert sind. Auf diese Weise können beispielsweise Temperaturgradienten oder Zustandswertverteilung anderer Zustandsparameter in dem Rotorelement bestimmt werden, es können z.B. Temperaturen oder andere Zustandsparameter an verschiedenen neuralgischen Punkten bestimmt werden oder dergleichen. Auch ist es möglich, Sensoreinheiten mit SAW-Sensorelementen im Bereich des Statorelements oder des Gehäuseteils anzuordnen, deren Koppelelement wiederum so zu positionieren, dass sie mit der Koppelstruktur der Abfrageeinheit koppeln können. Auf diese Weise können mit ein und derselben Abfrageeinheit z.B. auch eine ein oder mehrere Zustandsparameter des Stators, wie z.B. eine Statortemperatur, oder Zustandsparameter, wie Temperaturen, von weiteren Elementen der Kraft- oder Arbeitsmaschine, wie z.B. eines Elektromotors, erfasst und überwacht werden, um eine noch bessere Analyse der Maschine, z.B. des Elektromotors, im Betrieb zu erhalten und gegebenenfalls eine noch auf weiteren Parametern basierte Steuerungsoption zu schaffen.

In einem weiteren Aspekt gibt die Erfindung, wie bereits erwähnt, eine Überwachungseinrichtung zum Überwachen eines Zustandsparameters, wie einer Temperatur eines rotierenden Elements, insbesondere des Rotorelements einer Kraft- oder Arbeitsmaschine, wie z.B. eines Elektromotors, insbesondere eines Synchronmotors, an. Diese Überwachungseinrichtung enthält einerseits eine Sensoreinheit und andererseits eine Abfrageeinheit. Die Sensoreinheit ist eine wie vorstehend beschriebene Einheit, nämlich eine solche, die wenigstens ein auf dem Prinzip der Oberflächenwellen basierendes SAW-Sensorelement zum Erfassen eines Zustandswertes eines Zustandsparameters, ein Koppelelement und eine das SAW-Sensorelement und das Koppelelement zum Übertragen von analogen elektromagnetischen Signalen verbindende Leiterstruktur aufweist. Dieses Sensorelement ist als gesondertes miniaturisiertes Bauteil gebildet und kann entsprechend eingesetzt werden, kann an rotierenden Elementen, wie insbesondere einem Rotor eines Elektromotors oder einem anderen Rotorelement einer Kraft- oder Arbeitsmaschine, wie an einem Turbinenläufer, angeordnet werden, insbesondere in einer dort angebrachten Bohrung versenkt werden. Hierfür ist die Sensoreinheit in einer axialen Richtung lang gestreckt ausgebildet und weist an einem ersten Längsende das Koppelelement und an einem gegenüberliegenden zweiten Längsende das SAW-Sensorelement auf und dazwischen die das Koppelelement und das SAW-Sensorelement in Längsrichtung verbindende Leiterstruktur. Die erfindungsgemäße Überwachungseinrichtung enthält des Weiteren die Abfrageeinheit, die einen Signalgenerator zum Erzeugen von Abfragesignalen, eine mit dem Signalgenerator verbindbare Koppelstruktur sowie einen Auswerteschaltkreis zum Auswerten von von der Sensoreinheit empfangenen Antwortsignalen aufweist. Die Abfrageeinheit ist eine solche, die nach dem S-FSCW Prinzip arbeitet. Dies bringt die vorstehend zu der Anwendung dieses Prinzips bereits dargelegten Vorteile mit sich.

Eine solche Überwachungseinrichtung ist, wie schon erwähnt, besonders gut geeignet, um eine Überwachung eines Zustandsparameters, z.B. eine Temperaturüberwachung, eines rotierenden Elementes, insbesondere in einer Kraft- oder Arbeitsmaschine, wie einem Elektromotor, vorzunehmen und dafür in einer wie vorstehend beschriebenen Weise in der Maschine, wie dem Elektromotor, verbaut bzw. dort angebracht oder angeordnet zu werden. Sofern die Sensoreinheit mehr als ein SAW-Sensorelement umfasst, sind diese derart konzipiert, z.B. durch die Gestaltung und Platzierung von Resonatoren bzw. Reflektoren auf dem SAW-Kristall, und mit dem Koppelement in einer solchen Weise über Leiterstrukturen verbunden, dass sich eine Laufzeitdifferenz der Signalantworten ergibt, so dass die Antwortsignale der SAW-Sensorelemente getrennt erfasst werden können.

Bei der Sensoreinheit der erfindungsgemäßen Überwachungseinrichtung können das Koppelelement, die Leiterstruktur und das wenigstens eine SAW-Sensorelement insbesondere auf einem gemeinsamen Substrat angeordnet sein, bzw. können diese Elemente auf einem gemeinsamen Substrat ausgebildet sein. Ein solches Substrat kann insbesondere ein nicht ferromagnetisches Material sein, zum Beispiel eine Keramik, ein Kunststoff oder dergleichen. Ein solches gemeinsames Substrat gibt der Sensoreinheit eine Eigenfestigkeit und lässt diese vergleichsweise einfach zum Beispiel in einer in einem rotierenden Element, insbesondere einem Rotor eines Elektromotors, eingebrachten Bohrung versenken und dort einbauen und festlegen.

Auch wenn grundsätzlich ebenfalls nach dem Resonatorprinzip arbeitende SAW-Sensorelemente möglich sind, wird, wie vorstehend bereits erwähnt, ein SAW-Sensorelement bevorzugt, welches eine nach dem Laufzeitverzögerungsprinzip arbeitendes SAW-Sensorelement (Delayline) ist.

Die Überwachungseinrichtung kann mit Vorteil genau eine Abfrageeinheit sowie wenigstens zwei, insbesondere mehr als zwei, mit von der Abfrageeinheit abfragbare und gesondert in ihren Antworten auswertbare Sensoreinheiten enthalten. Diese Sensoreinheiten verfügen dann alle über ein SAW-Sensorelement, ein Kopplungselement und eine diese beiden Elemente verbindende Leiterstruktur. Sie können alle zum Messen von Zustandswerten desselben Zustandsparameters, wie einer Temperatur, ausgebildet sein. Sie können aber auch für die Messung von Zustandswerten unterschiedlicher Zustandsparameter, wie Temperatur und Drehmoment) ausgerichtet sein, so dass eine Auswerteeinheit eben unterschiedliche Zustandsparameter mit der Überwachungseinrichtung überwachen kann.

Weitere Vorteile und Merkmale der Erfindung ergeben sich aus der nachfolgenden Beschreibung möglicher Ausführungsformen anhand der beigefügten Figuren. Dabei zeigen:
- Figur 1: eine schematische Ansicht wesentlicher Komponenten eines Elektromotors in einer Explosionsdarstellung mit Teilen der erfindungsgemäßen Überwachungseinrichtung;
- Figur 2: eine der Figur 1 vergleichbare Explosionsdarstellung aus einer anderen Perspektive;
- Figur 3: in einer vergrößerten Ausschnittdarstellung und explodiert die Anordnung einer Sensoreinheit in einer Bohrung auf einer Stirnseite des Rotors des Elektromotors aus Figur 1;
- Figur 4: eine vergleichbare Ansicht wie Figur 3, jedoch mit versenkt angeordneter Sensoreinheit;
- Figur 5: eine geschnittene Ausschnittdarstellung zur Veranschaulichung der Anordnung der Sensoreinheit in der Bohrung;
- Figur 6: eine Explosionsdarstellung einer möglichen ersten Ausgestaltungsvariante der Sensoreinheit; und
- Figur 7: eine Explosionsdarstellung einer möglichen zweiten Ausgestaltungsvariante der Sensoreinheit.

In den Figuren sind mögliche Ausgestaltungsvarianten der Erfindung am Beispiel einer Verwirklichung in einem Elektromotor dargestellt und werden nachstehend näher erläutert. Dabei ist hier noch einmal zu betonen, dass die Erfindung nicht auf die Anwendung in Elektromotoren begrenzt ist, sondern auch in anderen Systemen mit rotierenden Elementen, bei denen es Zustände zu überwachen gilt, eingesetzt werden kann, wie insbesondere in andere Kraft- oder auch in Arbeitsmaschinen, wie in Turbinen, Generatoren und dergleichen.

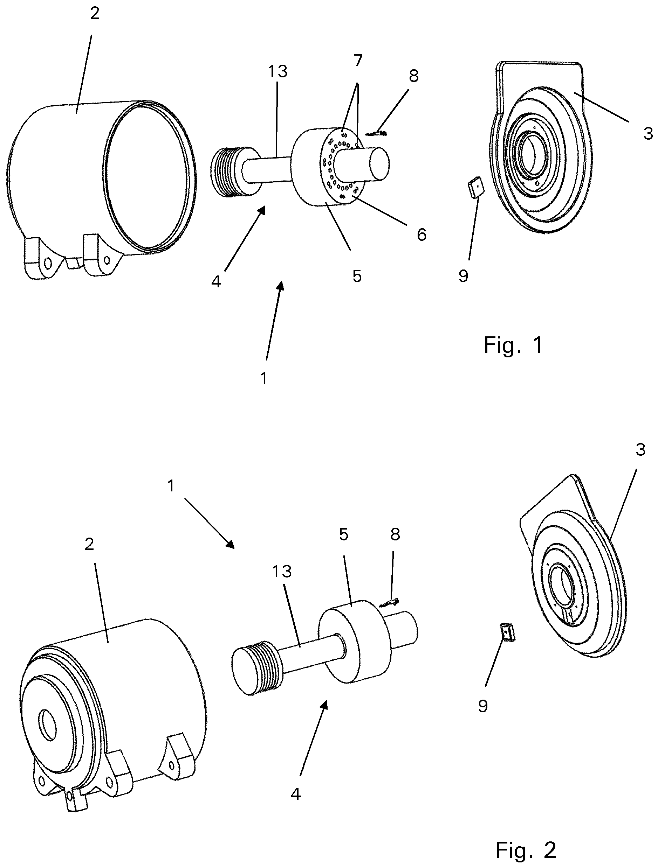

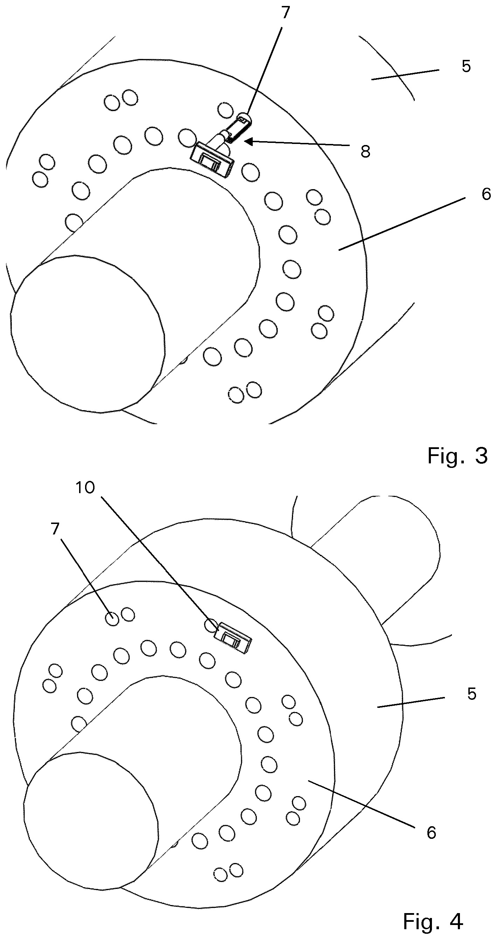

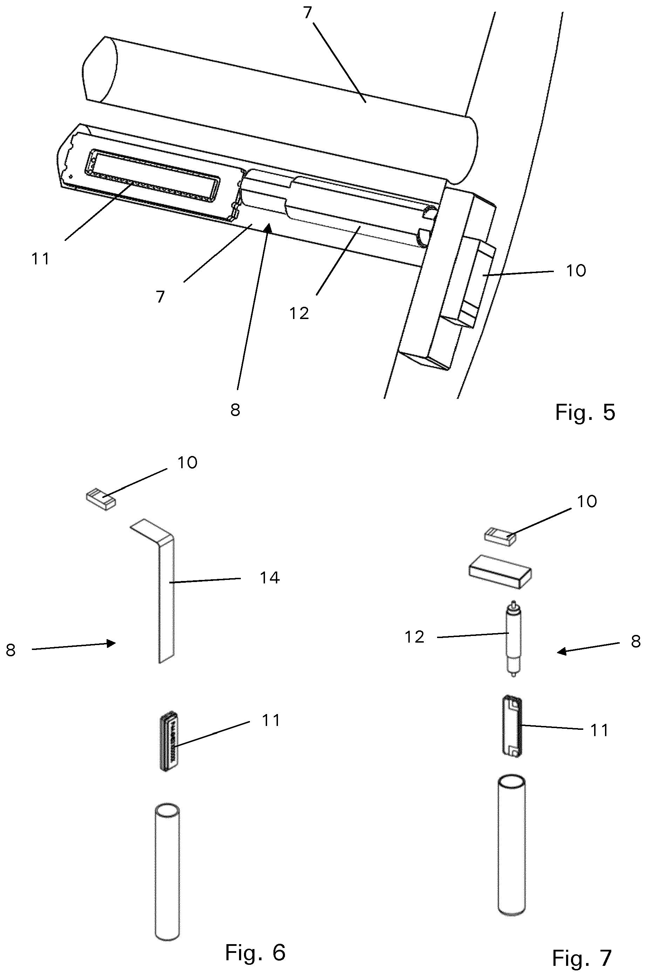

Zunächst zeigen die Figuren 1 und 2 jeweils in einer Explosionsdarstellung wesentliche Komponenten eines Elektromotors 1 als ein Beispiel einer mit der Erfindung zu verbessernden Arbeitsmaschine. Gezeigt sind ein Gehäusetopf 2, welcher einen nicht näher gezeigten Stator aufnimmt, ein den Gehäusetopf 2 verschließender und zusammen mit diesem ein Motorgehäuse bildender Gehäusedeckel 3 und ein in dem Motorgehäuse aufgenommener Rotor 4. Der hier gezeigte Elektromotor 1 ist insbesondere ein Synchronmotor, dessen Rotor 4 hier nicht näher dargestellte Permanentmagnete enthält. Diese sind in einem Rotorkörper 5 angeordnet bzw. eingelassen. Der Rotorkörper 5 weist von einer Stirnseite 6 her in den Rotorkörper axial geführte Bohrungen 7 auf, deren Öffnungen im zusammengefügten Zustand des Elektromotors 1 in Richtung des Gehäusedeckels 3 weisen. Eine Sensoreinheit 8 ist in einer der Bohrungen 7 (teil-)versenkt angeordnet. An dem Gehäusedeckel 3 ist eine Koppelstruktur 9 einer mit ihren weiteren Komponenten nicht näher dargestellten Abfrageeinheit angeordnet und festgelegt. Die Anordnung der Sensoreinheit 8 in einer der Bohrungen 7 an dem Rotorkörper 5 ist in den Figuren 3 bis 5 noch einmal näher dargestellt. Zu erkennen ist zunächst in der Figur 5 der weitere Aufbau der Sensoreinheit 8, die in der Bohrung 7 mit einem wesentlichen Teil ihrer Erstreckung versenkt angeordnet ist. Die Sensoranordnung 8 ist im Wesentlichen längserstreckt gebildet mit einem an einem ersten Längsende angeordneten Koppelelement 10, einem an einem zweiten Längsende angeordneten SAW-Sensorelement 11, das z.B. ein für eine Temperaturüberwachung des Rotors genutztes SAW-Temperatursensorelement sein kann, und einer diese beiden Elemente, Koppelelement 9 und SAW-Sensorelement 11 verbindenden Leiterstruktur 12. Leiterstruktur 12 und SAW-Sensorelement 11 sind in der Bohrung 7 versenkt angeordnet; das Koppelelement 10 liegt außerhalb der Bohrung 7 und dabei auf der Oberfläche der Stirnseite 6 auf. Die radiale Position des Koppelelements 10 bezogen auf eine Rotationsachse 13 des Rotors 4 entspricht dabei der bezogen auf dieselbe Achse 13 gesehenen radialen Position der Koppelstruktur 9 der Abfrageeinheit. Im zusammengesetzten Zustand ist zwischen dem Gehäusedeckel 3 des Elektromotors 1 und der dort angeordneten Koppelstruktur 9 und der Stirnseite 6 des Rotorkörpers 5 und dem dort angeordneten Koppelelement 10 der Sensoreinheit 8 ein enger Luftspalt gebildet, der zum Beispiel 10 mm betragen kann. Über diesen Luftspalt hinweg kann zwischen der Koppelstruktur 9 und dem Koppelelement 10 eine drahtlose Kommunikationsverbindung zum Übertragen analoger Signale, insbesondere Hochfrequenzsignale, ausgebildet werden, insbesondere eine Nahfeldkopplung, sodass ausgehend von einer Abfrage Elektronik mit einem Signalgenerator, der mit der Koppelstruktur 9 verbunden ist, ein Abfragesignal, zum Beispiel ein solches der Frequenz 2,4 GHz, an das Koppelelement 10 übermittelt und von dort über die Leiterstruktur 12 bis zu dem SAW-Sensorelement 11 geleitet werden kann. Das SAW-Sensorelement 11 kann insbesondere ein solches sein, dass nach dem sogenannten Delayline-Prinzip arbeitet und das mit einer durch den Zustandswert des Zustandsparameters, z.B. durch eine Rotortemperatur, der das SAW-Sensorelement ausgesetzt ist, bestimmten Verzögerung das Signal entlang der Leiterstruktur 12 wieder zurück übermittelt an das Koppelelement 10, von wo aus es über die Kopplung zur Koppelstruktur 9 zurückgegeben wird an die Abfrageeinheit. Von der Koppelstruktur 9 gelangt das Signal dann zu einem Auswerteschaltkreis der Abfrageeinheit, der aus der festgestellten Laufzeitverzögerung einen am Ort des SAW-Sensorelement 11 anliegenden Zustandswert des Zustandsparameters, z.B. die dort anliegende Temperatur, ermittelt. Die Abfrageeineheit ist eine solche, die nach dem S-FSCW Prinzip arbeitet. Hierdurch sowie durch die gezeigte Positionierung von Sensoreinheit 8, insbesondere deren Koppelelement 10, und Koppelstruktur 9 und auch durch eine hier verwirklichte Nahfeldkopplung wird erreicht, dass eine Kupplung zwischen Koppelstruktur 9 und Koppelelement 10 über einen weiten Rotationsbereich des Rotors 4 erhalten ist. Dies können insbesondere 270° oder mehr sein, sodass eine Signalabfrage von der Abfrageeinheit, insbesondere über deren Koppelstruktur 9 zu der Sensoreinheit 8 gestartet und das Antwortsignal empfangen werden kann, während das Koppelelement 10 sich im Kopplungsbereich mit der Koppelstruktur 9 befindet.

Mit dieser Anordnung kann also ein Zustandswert eines Zustandsparameters, kann bspw. die Temperatur, des Rotors 4 mit einer tatsächlichen Messung bestimmt werden und kann dieser Wert im Folgenden für die Steuerung des Betriebs des Elektromotors 1 verwendet werden, insbesondere für eine Leistungssteuerung bzw. Leistungsbegrenzung. Im Falle der so exakter möglichen Bestimmung der Temperatur kann der Elektromotor 1 dann weiter in den Grenzbereich hinein betrieben werden kann bis zu einer maximal zulässigen Temperatur, ohne dass hier ein solchermaßen weit bemessener Puffer eingerechnet werden muss für Ungenauigkeiten, die aus der bisher üblichen Abschätzung bzw. Simulation der Rotortemperatur entstehen.

In den Figuren 6 und 7 sind zwei mögliche Varianten gezeigt, wie die Sensoreinheit 8 gebildet sein kann. In der Variante gemäß Figur 6 ist ein Substratelement 14 gezeigt, an dem das SAW-Sensorelement 11 einerseits und das Koppelelement 10 andererseits festgelegt sind und über welches die hier nicht näher gezeigten Leiterstrukturen geführt sind. Das Substratelement 14 trägt insoweit die elektromagnetische Signalverbindung, bildet aber auch eine mechanisch stabile Brücke und einen Halter für die einzelnen Elemente aus. Das Substratelement 14 ist dabei insbesondere aus einem nicht ferromagnetischen Material, um nicht etwa einen Effekt auf den Rotor auszuüben und die Ausbildung der Magnetfelder zu beeinflussen.

In Figur 7 ist ein alternativer Aufbau gezeigt, in dem die Leiterstruktur 12 als Koaxial- bzw. Hohlleiter ausgebildet ist und neben der Leitungsfunktion auch eine mechanische Stabilisierungs- und Verbindungsfunktion übernimmt. SAW-Sensorelement 11 und Koppelelement 10 sind jeweils mit den Längsenden der Leiterstruktur 12 verbunden.

Es soll hier erwähnt sein, dass abweichend von den in den Figuren gezeigten Beispielen nicht nur eine Sensoreinheit 8 in dem Rotor 4 angeordnet werden kann, sondern dass derer Sensoreinheiten 8 mit analogem Aufbau auch zwei oder mehr in dem Rotor 4 angeordnet werden können, insbesondere auch mit einer Positionierung der SAW-Sensorelemente 11 in unterschiedlichen axialen Tiefen des Rotors 4, genauer des Rotorkörpers 5, um auf diese Weise an unterschiedlichen Positionen Messungen der Zustandswerte von Zustandsparametern, wie z.B. Temperaturmessungen, vorzunehmen. Diese mehreren Sensoreinheiten können insgesamt mit ein und derselben Abfrageeinheit, insbesondere über ein und dieselbe Koppelstruktur 9, abgefragt werden, insbesondere auf unterschiedlichen Kommunikationskanälen. Auch ist es möglich, an einem der stationären Elemente, Stator und/oder Gehäuse oder auch an einer Starterwicklung entsprechende SAW-Sensorelement 11 zu positionieren und die Koppelelemente 10 der zugehörigen Sensoreinheiten 8 so anzuordnen, dass sie mit der Koppelstruktur 9 der Abfrageeinheit koppeln und entsprechend von der Abfrageeinheit mit abgefragt und ausgelesen werden können.

Zu erwähnen ist hier auch, dass die Anordnung der Koppelstruktur 9 der Abfrageeinheit nicht unbedingt in dem Gehäusedeckel des Elektromotors 1 erfolgen muss. Die Koppelstruktur kann vielmehr auch in einem Getriebegehäuse angeordnet sein, z.B. wenn der Elektromotor 1, wie dies heute z.B. für solche Elektromotoren, die für den Antrieb von Elektrofahrzeugen eingesetzt werden, schon vorgesehen ist, in einer Baueinheit mit einem Getriebe gebildet ist.

### Bezugszeichenliste

- 1: Elektromotor
- 2: Gehäusetopf
- 3: Gehäusedeckel
- 4: Rotor
- 5: Rotorkörper
- 6: Stirnseite
- 7: Bohrung
- 8: Sensoreinheit
- 9: Koppelstruktur
- 10: Koppelelement
- 11: SAW-Sensorelement
- 12: Leiterstruktur
- 13: Rotationsachse
- 14: Substratelement

## Patentansprüche

1. Kraft- oder Arbeitsmaschine, insbesondere Elektromotor (1), mit einem Gehäuseteil (2, 3), mit in dem Gehäuseteil (2, 3) angeordnet je einem Statorelement und einem Rotorelement (4) sowie mit einer Überwachungseinrichtung zum Überwachen eines Zustandsparameters, insbesondere der Temperatur, des Rotorelements (4), wobei die Überwachungseinrichtung eine Sensoreinheit (8) und eine Abfrageeinheit umfasst, wobei die Sensoreinheit (8) an dem Rotorelement (4) angeordnet ist und wenigstens ein auf dem Prinzip der Oberflächenwellen basierendes SAW-Sensorelement (11) zum Erfassen eines Zustandswerts des Zustandsparameters, ein Koppelelement (10) und eine das SAW-Sensorelement (11) und das Koppelelement (10) zum Übertragen von analogen elektromagnetischen Signalen verbindende Leiterstruktur (12) aufweist und wobei die Abfrageeinheit einen Signalgenerator zum Erzeugen von Abfragesignalen, eine mit dem Signalgenerator verbundene, an dem Stator oder an einem Abschnitt des Gehäuseteils (2, 3), dem Rotorelement (4) zugewandt angeordnete Koppelstruktur (9) sowie einen Auswerteschaltkreis zum Auswerten von von der Sensoreinheit (8) empfangenen Antwortsignalen aufweist, wobei die Koppelstruktur (9) in einem Bereich angeordnet ist, der entlang eines zwischen dem Rotorelement (4) und dem Statorelement oder dem Abschnitt des Gehäuseteils (2, 3) ausgebildeten Luftspaltes mit einem von dem Koppelelement (10) bei rotierendem Rotorelement (4) überstrichenen Bereich in einer Weise korreliert, dass eine Kopplung zwischen der Koppelstruktur und dem Koppelelement zur Signalübertragung über den Luftspalt hinweg ermöglicht ist, **dadurch gekennzeichnet, dass** die Abfrageeinheit eine nach dem S-FSCW Prinzip arbeitende Abfrageeinheit ist und eingerichtet ist für eine Synchronisation
der Abfrageeinheit mit der Rotation des Rotorelements (4) in einer solchen Weise, dass die Abfrageeinheit eine Abfrage der Sensoreinheit (8) im Verlauf von wenigstens zwei Umdrehungen des Rotorelements (4) bei einem bestimmten Frequenzpunkt wiederholt durchführt, wobei die Abfragen der Sensoreinheit (8) bei dem bestimmten Frequenzpunkt bei gleicher Drehwinkelposition des Rotorelements (4) relativ zu dem Statorelement erfolgt.

2. Kraft- oder Arbeitsmaschine, insbesondere Elektromotor (1), nach Anspruch 1, **dadurch gekennzeichnet, dass** das SAW-Sensorelement (11) ein nach dem Laufzeitverzögerungsprinzip arbeitendes SAW-Sensorelement (11) ist.

3. Kraft- oder Arbeitsmaschine, insbesondere Elektromotor (1), nach einem der vorhergehenden Ansprüche, **dadurch gekennzeichnet, dass** diese ein Synchronmotor ist mit an dem Rotorelement (4) angeordneten Permanentmagneten.

4. Kraft- oder Arbeitsmaschine, insbesondere Elektromotor (1), nach einem der vorhergehenden Ansprüche, **dadurch gekennzeichnet, dass** das Koppelelement (10) an einer an einem axialen Ende des Rotors (4) liegenden Oberfläche des Rotorelements (4) angeordnet ist.

5. Kraft- oder Arbeitsmaschine, insbesondere Elektromotor (1), nach Anspruch 4, **dadurch gekennzeichnet, dass** das Koppelelement (10) und die Koppelstruktur (9) so positioniert sind, dass über einen möglichst großen Drehwinkel-Bereich des Rotorelements (4) relativ zu dem Statorelement eine Kopplung zwischen dem Koppelelement (10) und der Koppelstruktur (9) erreichbar ist und so auswertbare Signale empfangbar sind.

6. Kraft- oder Arbeitsmaschine, insbesondere Elektromotor (1), nach einem der vorhergehenden Ansprüche, **dadurch gekennzeichnet, dass** die Sensoreinheit (9) eine axial langgestreckte Form aufweist und in einer Bohrung (7) in dem Rotorelement (4) jedenfalls teilversenkt derart angeordnet ist, dass ein oder mehrere SAW-Sensorelement(e) (11) im Innern der Bohrung (7) angeordnet ist/sind, das Koppelelement (10) an der Oberfläche des Rotorelements (10) freiliegt.

7. Kraft- oder Arbeitsmaschine, insbesondere Elektromotor (1), nach Anspruch 6, **dadurch gekennzeichnet, dass** die Sensoreinheit (8) ein SAW-Temperatursensorelement (11) aufweist und in der Bohrung (7) in einem, insbesondere pastenförmigen, Material eingebettet ist, welches eine hohe thermische Leitfähigkeit aufweist und welches eine Verankerung der Sensoreinheit in der Bohrung (7) bewirkt.

8. Kraft- oder Arbeitsmaschine, insbesondere Elektromotor (1), nach einem der vorhergehenden Ansprüche, **dadurch gekennzeichnet, dass** der Luftspalt ein Maß von 20 mm oder weniger aufweist, insbesondere von 15 mm oder weniger.

9. Kraft- oder Arbeitsmaschine, insbesondere Elektromotor (1), nach Anspruch 8, **dadurch gekennzeichnet, dass** die Abfrageeinheit, insbesondere deren Koppelstruktur (9), und das Koppelelement (10) der Sensoreinheit (8) so eingerichtet und abgestimmt sind, dass eine vorrangig durch das zeitlich sich verändernde Magnetfeld bestimmte Nahbereichskommunikation zwischen der Abfrageeinheit und der Sensoreinheit (8) stattfindet.

10. Kraft- oder Arbeitsmaschine, insbesondere Elektromotor (1), nach einem der vorhergehenden Ansprüche, **dadurch gekennzeichnet, dass** sie wenigstens zwei jeweils ein auf dem Prinzip der Oberflächenwellen basierendes SAW-Sensorelement (11), ein Koppelelement (10) und eine das SAW-Sensorelement (11) und das Koppelelement (10) zum Übertragen von analogen elektromagnetischen Signalen verbindende Leiterstruktur (12) aufweisende Sensoreinheiten (8) aufweist, deren Koppelelemente (10) angeordnet sind, mit der Koppelstruktur (9) der einen Abfrageeinheit für eine Signalübertragung zu koppeln, und dass die Abfrageeinheit eingerichtet ist, die wenigstens zwei Sensoreinheiten (8) in unterschiedlichen Kommunikationsfenstern abzufragen.

11. Überwachungseinrichtung zum Überwachen eines Zustandsparameters, wie einer Temperatur, eines rotierenden Elements, insbesondere des Rotors (4) einer Kraft- oder Arbeitsmaschine, insbesondere eines Elektromotors (1), insbesondere eines Synchronmotors, mit einer Sensoreinheit (8) und einer Abfrageeinheit, wobei die Sensoreinheit (8) wenigstens ein auf dem Prinzip der Oberflächenwellen basierendes SAW-Sensorelement (11) zum Erfassen eines Zustandswertes des Zustandsparameters, ein Koppelelement (10) und eine das SAW-Sensorelement (11) und das Koppelelement (10) zum Übertragen von analogen elektromagnetischen Signalen verbindende Leiterstruktur (12) aufweist und wobei die Abfrageeinheit einen Signalgenerator zum Erzeugen von Abfragesignalen, eine mit dem Signalgenerator verbindbare Koppelstruktur (9) sowie einen Auswerteschaltkreis zum Auswerten von von der Sensoreinheit (8) empfangenen Antwortsignalen aufweist, wobei die Sensoreinheit (8) in einer axialen Richtung langgestreckt gebildet ist mit dem Koppelelement (10) an einem ersten Längsende der Sensoreinheit (8) und dem SAW-Sensorelement (11) an einem dem ersten Längsende gegenüberliegenden zweiten Längsende der der Sensoreinheit (8) und dazwischen der das Koppelelement (10) und das SAW-Sensorelement (11) in Längsrichtung verbindenden Leiterstruktur (12), **dadurch gekennzeichnet, dass** die Abfrageeinheit eine nach dem S-FSCW Prinzip arbeitende Abfrageeinheit ist, wobei die Abfrageeinheit zu einer eine Synchronisation mit der Rotation des rotierenden Elements in einer solchen Weise eingerichtet ist, dass sie eine Abfrage der Sensoreinheit (8) im Verlauf von wenigstens zwei Umdrehungen des rotorierenden Elements bei einem bestimmten Frequenzpunkt wiederholt durchführt, wobei die Abfragen der Sensoreinheit (8) bei dem bestimmten Frequenzpunkt bei gleicher Drehwinkelposition des rotorienden Elements erfolgt.

12. Überwachungseinrichtung nach Anspruch 11, **dadurch gekennzeichnet, dass** das Koppelelement (10), die Leiterstruktur (12) und das SAW-Sensorelement (11) auf einem gemeinsamen Substrat (14) angeordnet und/oder ausgebildet sind.

13. Überwachungseinrichtung nach einem der Ansprüche 11 oder 12, **dadurch gekennzeichnet, dass** das SAW-Sensorelement (11) ein nach dem Laufzeitverzögerungsprinzip arbeitendes SAW-Sensorelement (11) ist.

14. Überwachungseinrichtung nach einem der Ansprüche 11 bis 13, **dadurch gekennzeichnet, dass** sie genau eine Abfrageeinheit sowie wenigstens zwei, insbesondere mehr als zwei, mit von der Abfrageeinheit abfragbare und gesondert in ihren Antworten auswertbare Sensoreinheiten (8) enthält.

## Claims

1. Power or work machine, in particular electric motor (1), with a housing part (2, 3), with a stator element and a rotor element (4) arranged in the housing part (2, 3) and with a monitoring device for monitoring a status parameter, in particular the temperature, of the rotor element (4), wherein the monitoring device comprises a sensor unit (8) and an interrogation unit, wherein the sensor unit (8) is arranged on the rotor element (4) and at least one SAW sensor element (11) based on the principle of surface waves for detecting a status value of the status parameter, a coupling element (10) and a conductor structure (12) connecting the SAW sensor element (11) and the coupling element (10) for transmitting analogue electromagnetic signals, and wherein the interrogation unit comprises a signal generator for generating interrogation signals, a coupling structure (9) connected to the signal generator and arranged on the stator or on a section of the housing part (2, 3) facing the rotor element (4), and an evaluation circuit for evaluating response signals received from the sensor unit (8), wherein the coupling structure (9) is arranged in a region which correlates along an air gap formed between the rotor element (4) and the stator element or the section of the housing part (2, 3) with a region swept by the coupling element (10) when the rotor element (4) is rotating in such a way that a coupling between the coupling structure and the coupling element for signal transmission across the air gap is made possible, **characterised in that in that** the interrogation unit is an interrogation unit operating according to the S-FSCW principle and is set up for synchronisation of the interrogation unit with the rotation of the rotor element (4) in such a way that the interrogation unit repeatedly carries out an interrogation of the sensor unit (8) in the course of at least two rotations of the rotor element (4) at a specific frequency point, the interrogations of the sensor unit (8) at the specific frequency point taking place at the same angular position of rotation of the rotor element (4) relative to the stator element.

2. Power or work machine, in particular electric motor (1), according to claim 1, **characterised in that** the SAW sensor element (11) is a SAW sensor element (11) operating according to the propagation delay principle.

3. Power or working machine, in particular electric motor (1), according to one of the preceding claims, **characterised in that** this is a synchronous motor with permanent magnets arranged on the rotor element (4).

4. Power or working machine, in particular electric motor (1), according to one of the preceding claims, **characterised in that** the coupling element (10) is arranged on a surface of the rotor element (4) located at an axial end of the rotor (4).

5. Power or working machine, in particular electric motor (1), according to claim 4, **characterised in that** the coupling element (10) and the coupling structure (9) are positioned in such a way that a coupling between the coupling element (10) and the coupling structure (9) can be achieved over the widest possible range of rotation angles of the rotor element (4) relative to the stator element and thus signals which can be evaluated can be received.

6. Power or working machine, in particular electric motor (1), according to one of the preceding claims, **characterised in that** the sensor unit (9) has an axially elongated shape and is arranged in a bore (7) in the rotor element (4), at least partially recessed, in such a way that one or more SAW sensor element(s) (11) is/are arranged inside the bore (7), the coupling element (10) is exposed on the surface of the rotor element (10).

7. Power or working machine, in particular electric motor (1), according to claim 6, **characterised in that** the sensor unit (8) has a SAW temperature sensor element (11) and is embedded in the bore (7) in a material, in particular in paste form, which has a high thermal conductivity and which causes the sensor unit to be anchored in the bore (7).

8. Power or working machine, in particular electric motor (1), according to one of the preceding claims, **characterised in that** the air gap has a dimension of 20 mm or less, in particular of 15 mm or less.

9. Power or working machine, in particular electric motor (1), according to claim 8, **characterised in that** the interrogation unit, in particular its coupling structure (9), and the coupling element (10) of the sensor unit (8) are set up and coordinated in such a way that short-range communication between the interrogation unit and the sensor unit (8), which is primarily determined by the time-varying magnetic field, takes place.

10. Power or working machine, in particular electric motor (1), according to one of the preceding claims, **characterised in that** it has at least two sensor units (8) each having a SAW sensor element (11) based on the principle of surface waves, a coupling element (10) and a conductor structure (12) connecting the SAW sensor element (11) and the coupling element (10) for transmitting analogue electromagnetic signals, whose coupling elements (10) are arranged to couple with the coupling structure (9) of the one interrogation unit for signal transmission, and **in that** the interrogation unit is set up to interrogate the at least two sensor units (8) in different communication windows.

11. Monitoring device for monitoring a status parameter, such as a temperature, of a rotating element, in particular the rotor (4) of a power or driven machine, in particular an electric motor (1), in particular a synchronous motor, having a sensor unit (8) and an interrogation unit, the sensor unit (8) having at least one SAW sensor element (11) based on the principle of surface waves for detecting a status value of the status parameter, a coupling element (10) and a conductor structure (12) connecting the SAW sensor element (11) and the coupling element (10) for transmitting analogue electromagnetic signals, and wherein the interrogation unit comprises a signal generator for generating interrogation signals, a coupling structure (9) connectable to the signal generator and an evaluation circuit for evaluating response signals received from the sensor unit (8) , wherein the sensor unit (8) is formed elongated in an axial direction with the coupling element (10) at a first longitudinal end of the sensor unit (8) and the SAW sensor element (11) at a second longitudinal end of the sensor unit (8) opposite the first longitudinal end and between them the conductor structure (12) connecting the coupling element (10) and the SAW sensor element (11) in the longitudinal direction, **characterised in that** the interrogation unit is an interrogation unit operating according to the S-FSCW principle, wherein the interrogation unit is set up for synchronisation with the rotation of the rotating element in such a way that it repeatedly carries out an interrogation of the sensor unit (8) in the course of at least two rotations of the rotating element at a specific frequency point, wherein the interrogation of the sensor unit (8) at the specific frequency point takes place at the same angular position of rotation of the rotating element.

12. Monitoring device according to claim 11, **characterised in that** the coupling element (10), the conductor structure (12) and the SAW sensor element (11) are arranged and/or formed on a common substrate (14).

13. Monitoring device according to one of claims 11 or 12, **characterised in that** the SAW sensor element (11) is a SAW sensor element (11) operating according to the propagation delay principle.

14. Monitoring device according to one of claims 11 to 13, **characterised in that** it contains exactly one interrogation unit and at least two, in particular more than two, sensor units (8) which can be interrogated by the interrogation unit and whose responses can be evaluated separately.

## Revendications

1. Machine motrice ou de travail, en particulier moteur électrique (1), comprenant une partie boîtier (2, 3), un élément stator et un élément rotor (4) disposés dans la partie boîtier (2, 3) et avec un dispositif de surveillance pour surveiller un paramètre d'état, en particulier la température, de l'élément rotor (4), dans lequel le dispositif de surveillance comprend une unité de capteur (8) et une unité d'interrogation, dans lequel l'unité de capteur (8) est disposée sur l'élément rotor (4) et au moins un élément de capteur SAW (11) fondé sur le principe des ondes de surface pour détecter une valeur d'état du paramètre d'état, un élément de couplage (10) et une structure conductrice (12) reliant l'élément de capteur SAW (11) et l'élément de couplage (10) pour transmettre des signaux électromagnétiques analogiques, et dans lequel l'unité d'interrogation comprend un générateur de signaux pour générer des signaux d'interrogation, une structure de couplage (9) reliée au générateur de signaux et disposée sur le stator ou sur une section de la partie du boîtier (2, 3) faisant face à l'élément rotor (4), et un circuit d'évaluation pour évaluer les signaux de réponse reçus de l'unité de capteur (8), la structure de couplage (9) est disposée dans une région qui correspond, le long d'un entrefer formé entre l'élément rotor (4) et l'élément stator ou la section de la partie boîtier (2, 3), à une région balayée par l'élément de couplage (10) lorsque l'élément rotor (4) tourne, de telle sorte qu'un couplage entre la structure de couplage et l'élément de couplage pour la transmission de signaux à travers l'entrefer est rendu possible, **caractérisé en ce que** l'unité d'interrogation est une unité d'interrogation fonctionnant selon le principe S-FSCW et est configurée pour la synchronisation de l'unité d'interrogation avec la rotation de l'élément rotor (4) de telle sorte que l'unité d'interrogation effectue de manière répétée une interrogation de l'unité de capteur (8) au cours d'au moins deux rotations de l'élément rotor (4) à un point de fréquence spécifique, les interrogations de l'unité de détection (8) au point de fréquence spécifique ont lieu à la même position angulaire de rotation de l'élément rotor (4) par rapport à l'élément de stator.

2. Machine motrice ou de travail, en particulier moteur électrique (1), selon la revendication 1, **caractérisée par le fait que** l'élément capteur SAW (11) est un élément capteur SAW (11) fonctionnant selon le principe du délai de propagation.

3. Machine motrice ou de travail, en particulier moteur électrique (1), selon l'une des revendications précédentes, **caractérisée par le fait qu'**il s'agit d'un moteur synchrone avec des aimants permanents disposés sur l'élément du rotor (4).

4. Machine motrice ou de travail, en particulier moteur électrique (1), selon l'une des revendications précédentes, **caractérisée en ce que** l'élément de couplage (10) est disposé sur une surface de l'élément rotor (4) située à une extrémité axiale du rotor (4).

5. Machine motrice ou de travail, en particulier moteur électrique (1), selon la revendication 4, **caractérisée en ce que** l'élément de couplage (10) et la structure de couplage (9) sont positionnés de telle sorte qu'un couplage entre l'élément de couplage (10) et la structure de couplage (9) peut être réalisé sur la plus grande plage possible d'angles de rotation de l'élément rotor (4) par rapport à l'élément stator et ainsi des signaux qui peuvent être évalués peuvent être reçus.

6. Machine motrice ou de travail, en particulier moteur électrique (1), selon l'une des revendications précédentes, **caractérisée en ce que** l'unité de capteur (9) a une forme axialement allongée et est disposée dans un alésage (7) de l'élément rotor (4), au moins partiellement en retrait, de telle sorte qu'un ou plusieurs élément(s) de capteur SAW (11) est/sont disposé(s) à l'intérieur de l'alésage (7), l'élément de couplage (10) est exposé sur la surface de l'élément rotor (10).

7. Machine motrice ou de travail, en particulier moteur électrique (1), selon la revendication 6, **caractérisée en ce que** l'unité de capteur (8) a un élément de capteur de température SAW (11) et est encastrée dans l'alésage (7) dans un matériau, en particulier sous forme de pâte, qui présente une conductivité thermique élevée et qui permet à l'unité de capteur d'être ancrée dans l'alésage (7).

8. Machine motrice ou de travail, en particulier moteur électrique (1), selon l'une des revendications précédentes, **caractérisée par le fait que** l'entrefer a une dimension inférieure ou égale à 20 mm, en particulier inférieure ou égale à 15 mm.

9. Machine motrice ou de travail, en particulier moteur électrique (1), selon la revendication 8, **caractérisée par le fait que** l'unité d'interrogation, en particulier sa structure de couplage (9), et l'élément de couplage (10) de l'unité de détection (8) sont configurés et coordonnés de telle sorte qu'une communication à courte portée entre l'unité d'interrogation et l'unité de détection (8), qui est principalement déterminée par le champ magnétique variable dans le temps, a lieu.

10. Machine motrice ou de travail, en particulier moteur électrique (1), selon l'une des revendications précédentes, **caractérisée en ce qu'**elle comporte au moins deux unités de capteurs (8) ayant chacune un élément de capteur SAW (11) fondé sur le principe des ondes de surface, un élément de couplage (10) et une structure conductrice (12) reliant l'élément de capteur SAW (11) et l'élément de couplage (10) pour la transmission de signaux électromagnétiques analogiques, dont les éléments de couplage (10) sont disposés de manière à se coupler à la structure de couplage (9) de l'unité d'interrogation unique pour la transmission de signaux, et **en ce que** l'unité d'interrogation est configurée pour interroger les au moins deux unités de détection (8) dans des fenêtres de communication différentes.

11. Dispositif de surveillance pour surveiller un paramètre d'état, tel qu'une température, d'un élément rotatif, en particulier le rotor (4) d'une machine motrice ou entraînée, en particulier un moteur électrique (1), en particulier un moteur synchrone, comportant une unité de détection (8) et une unité d'interrogation, l'unité de détection (8) comportant au moins un élément de détection SAW (11) fondé sur le principe des ondes de surface pour détecter une valeur d'état du paramètre d'état, un élément de couplage (10) et une structure conductrice (12) reliant l'élément de capteur SAW (11) et l'élément de couplage (10) pour transmettre des signaux électromagnétiques analogiques, et dans lequel l'unité d'interrogation comprend un générateur de signaux pour générer des signaux d'interrogation, une structure de couplage (9) pouvant être reliée au générateur de signaux et un circuit d'évaluation pour évaluer les signaux de réponse reçus de l'unité de capteur (8), dans laquelle l'unité de détection (8) est allongée dans une direction axiale avec l'élément de couplage (10) à une première extrémité longitudinale de l'unité de détection (8) et l'élément de détection SAW (11) à une deuxième extrémité longitudinale de l'unité de détection (8) opposée à la première extrémité longitudinale et entre eux la structure conductrice (12) reliant l'élément de couplage (10) et l'élément de détection SAW (11) dans la direction longitudinale, **caractérisée en ce que** l'unité d'interrogation est une unité d'interrogation fonctionnant selon le principe S-FSCW, dans lequel l'unité d'interrogation est configurée pour être synchronisée avec la rotation de l'élément rotatif de telle sorte qu'elle effectue de manière répétée une interrogation de l'unité de capteur (8) au cours d'au moins deux rotations de l'élément rotatif à un point de fréquence spécifique, dans lequel l'interrogation de l'unité de capteur (8) au point de fréquence spécifique a lieu à la même position angulaire de rotation de l'élément rotatif.

12. Dispositif de surveillance selon la revendication 11, **caractérisé par le fait que** l'élément de couplage (10), la structure conductrice (12) et l'élément de capteur SAW (11) sont disposés et/ou formés sur un substrat commun (14).

13. Dispositif de surveillance selon l'une des revendications 11 ou 12, **caractérisé par le fait que** l'élément capteur SAW (11) est un élément capteur SAW (11) fonctionnant selon le principe du délai de propagation.

14. Dispositif de surveillance selon l'une des revendications 11 à 13, **caractérisé par le fait qu'**il contient exactement une unité d'interrogation et au moins deux, en particulier plus de deux, unités de détection (8) qui peuvent être interrogées par l'unité d'interrogation et dont les réponses peuvent être évaluées séparément.
